# EUROPEAN PATENT SPECIFICATION

(11) **EP 2 902 827 B1**
(45) Date of publication and mention of the grant of the patent: **09.03.2022**
(21) Application number: 15152085.5
(22) Date of filing: 22.01.2015
(51) Int. Cl.: G02B 6/44

(54) **Cable gland**
Kabelflansch
Passe câble

(30) Priority: 03.02.2014 IT MI20140148
(43) Date of publication of application: 05.08.2015
(73) Proprietor: Prysmian S.p.A., 20126 Milano (IT)
(72) Inventor: Kerry, Matt, 20126 Milan (IT)
(74) Representative: Perani & Partners S.p.A.

(56) References cited:
- WO-A2-2010/008718
- US-A- 6 052 504
- US-A1- 2003 010 519
- US-A1- 2013 195 414

## Description

### Field of the invention

The present invention relates to the field of equipments and components for the insertion of optical cables in optical network closures, e.g. into an optical joint closure, optical network terminal or other optical junction box. In particular, the present invention relates to a cable gland comprising a separate cable securing assembly for retaining and securing an optical cable.

### Background of the invention

Optical network closures are housing devices able to house optical components such as the splices connecting the optical fibers of one or more optical cables to respective ones of the optical fibers of another optical cable or of optical cables for final users. Optical network closures are used to protect optical splices from dirt, humidity etc. and also from stresses.

Typically, optical cables enter into optical network closures through cable glands, which are intended to provide a safe mechanical connection of the cable to the optical network closure.

US 8 313 250 discloses a cable gland comprising a body having a first end and a second end, an internal sealing member shaped to be received within the second end of the body, a compression member attachable to the second end of the body and a locking elements for securing the gland when it is inserted in a joint closure. The cable gland also comprises a separate cable securing assembly with an elongated part able to fit inside the cable gland. The cable securing assembly is used to secure an optic cable by for example wrapping a length of the aramid strength members around the tie portion and tying them off.

### Summary of the invention

The Applicant observes that with the solution proposed in US 8 313 250 the separate cable securing assembly can be used for a single cable type only. As a matter of fact, different cable types can be used, differing not only in size, but also in the nature and arrangement of the cable strength member (e.g. consisting in one or more axial or peripheral rods, or made of high resistance fibers such as aramid fibers etc.), in the arrangement of optical fibers (e.g. housed in one or more tubes) etc.; in addition, some of these cable structures have also other requirements, such as provide a seal preventing access of water from the closure into the cable, and so on.

Any of these different cables and installations requires a specific gland arrangement, designed to provide the required strength member connection, sealing action, etc. This requires the installer to bring a number of different cable glands, in order to be prepared to use the one specific for each circumstance.

In addition, in case of cable replacement, if the new cable is not identical to the original one, also the gland must be replaced. Indeed, once that the installation of a cable is made, for example by using the gland of US8313250, if a user wants to remove that cable and insert another cable (e.g. with a different diameter, or with a different strength member arrangement) into the cable gland for securing it on the same cable securing assembly, the elongated part of the latter inhibits the other cable to fit in the cable gland.

The Applicant has also perceived that the mechanical connection between the cable securing assembly and the cable gland does not allow an effective retaining and securing action of the optical cable since it is the cable itself which allows blocking the elongated part against the inner wall of the cable gland. If the diameter of the cable does not substantially match with the inner diameter of the cable gland, the retention group can move due to its deformability, thereby causing the risk of a detachment of the retention group from the cable gland.

In view of the above, the Applicant has tackled the problem of providing a single cable gland usable with different cable securing assembly for retaining and securing optical cables regardless to the cable type, reducing installation times and saving moulding costs.

The Applicant has found that it is convenient to have a cable gland in which the portion adapted to be attached to the network closure and the cable securing assembly are independent from each other and can be assembled together during installation.

In particular, the cable gland has an end equipped with different cable securing assembly that can be attached to (with a threaded coupling for example) depending on the type of the cable which passes through the cable gland in order to retain and secure the cable on it.

Therefore, the present invention provides a cable gland according to claim 1 or 11. Preferred embodiments are defined by the dependent claims.

Preferably, the second clamping nut is ring-shaped and comprises a lateral surface at least partially internally threaded and configured to cooperate with the first end of the central body.

### Brief description of the drawings

The present invention will now be described in more detail hereinafter with reference to the accompanying drawings, in which some examples of the invention are shown.
FIG. 1 is an exploded view of a cable gland according to a first example of the present invention,
FIG. 2 is a side view of the cable gland of FIG. 1 in an assembled configuration when inserted in an optical joint closure,
FIG. 3 is an exploded view of a cable gland according to a second example of the present invention,
FIG. 4 is a side view of the cable gland of FIG. 3 in an assembled configuration when inserted in an optical joint closure,
FIG. 5 is an exploded view of a cable gland according to a third example of the present invention,
FIG. 6 is a side view of the cable gland of FIG. 5 in an assembled configuration when inserted in an optical joint closure.

### Detailed description

For the purposes of the present description and claims an optical cable is deemed to be any optical cable comprising one or more optical fiber units, an outer sheath and, optionally, strength members.

A fiber unit is defined as an assembly comprising one (or more) optical fiber(s) and an outer element surrounding said optical fiber(s) in order to protect the overall optical fiber(s) from damage. An optical fiber is typically constituted by a glass core, a glass cladding and a single or dual coating layer.

The optical fiber units may be arranged in various ways.

In particular, in the so-called "riser/drop optical cables", the fiber units are loosed arranged inside a single or double layer sheath and surrounded by aramid yarns.

In the so-called "central loose tube cables" (briefly, CLT cables), the optical fiber units are loosely arranged within a single buffer tube, which is in turn enclosed by an external sheath.

In the so-called "multi loose tube cables" (briefly, MLT cables), the optical fiber units are grouped in multiple bundles, the optical fiber units of each bundle being loosely arranged within a respective buffer tube. Typically, the buffer tubes may be arranged around a central strength member and stranded according to a closed or open helix (S-Z arrangement).

Further, a so-called "blown fiber tube cables" (briefly, BLT cables), similarly to the MLT cables, comprises a plurality of buffer tubes stranded between them (or arranged around a central strength member) according to a closed or open helix (S-Z arrangement). The buffer tubes are designed to receive single fiber units (or bundles of fiber units) blown inside the buffer tubes.

Both in CLT cables and in MTL cables, the external sheath may comprise strength members (typically made of steel or fiber reinforced resin) embedded within the sheath's thickness and placed at diametrically opposed positions. Moreover, or alternatively, the fiber units or buffer tubes may be surrounded by flexible strength members arranged radially externally of the optical fiber units. Flexible strength members may comprise aramid yarns or the like.

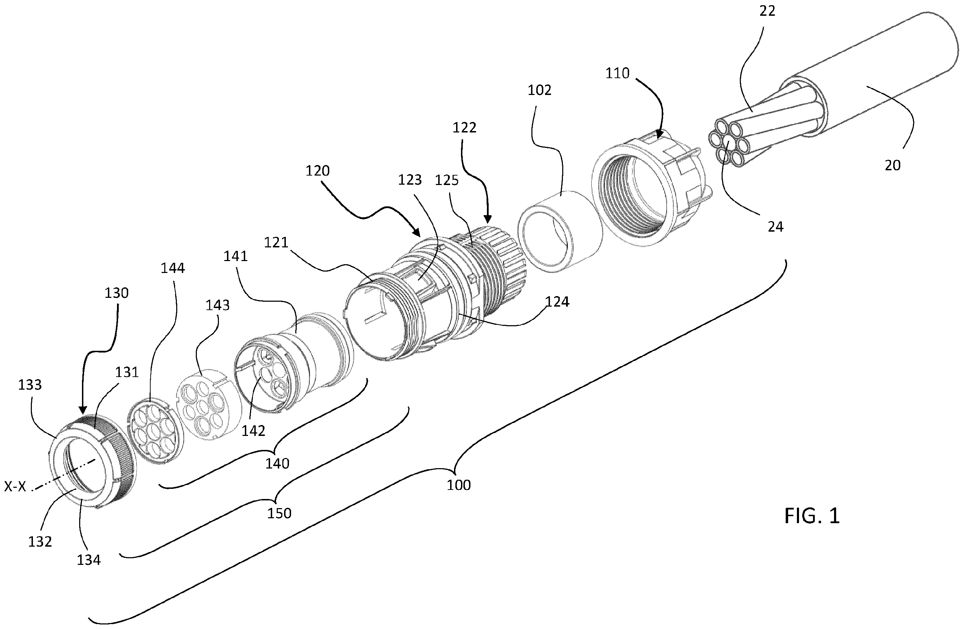

Figure 1 shows an exploded view of a cable gland 100 for securing and retaining an optical cable 20 according to a **first example** of the present invention.

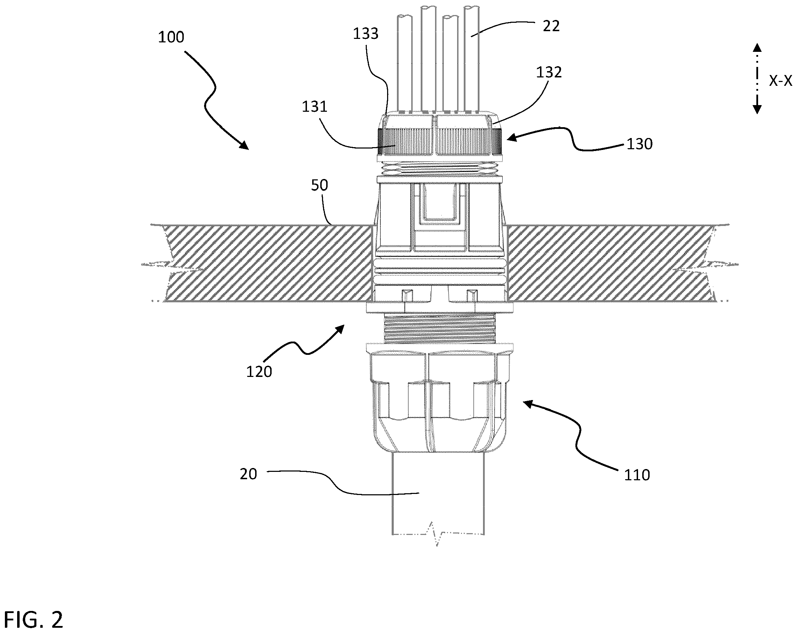

The cable gland 100 can be inserted in a wall 50 of an optical joint closure as shown in figure 2.

For assuring that the optical cables are secured to the optical joint closure, an optical cable is first inserted and secured into a cable gland, and then the cable gland enters the optical joint closure typically through a port. This enables the operator to make the cable insertion in the gland in a more comfortable position and then attach the gland bearing the cable to the closure.

The cable gland 100 comprises a central body 120 longitudinally extended along a direction X-X between a first end 121 and a second end 122. The cable gland 100 is formed of plastic material by conventional methods, for example by injection moulding. Preferably, the first end 121 of the central body 120 is externally threaded.

The central body 120 of the cable gland 100 comprises a cylindrical body configured to receive an optical cable 20 passing through the ends 121,122.

When the central body 120 is partially inserted in the wall 50 of the optical joint closure, the first end 121 is positioned inside the inner volume of the optical joint closure and the second end 122 is positioned outside the optical joint closure.

The central body 120 includes one or more locking elements 123 which protrude from the surface of the body 120. The locking elements 123 disposed on the central body 120 have a deformable cantilever structure which can flex when depressed. After the insertion of the cable gland 100 in the optical joint closure, the locking elements 123 are secured to the wall 50 of the optical joint closure. The cable gland 100 may be removed from the optical joint closure when the cantilever structures are sufficiently depressed so as to disengage from the wall 50.

The locking elements 123 are positioned between the first end 121 and the second end 122. One or two grooves may be located between the locking elements 123 and the second end 122 to receive respective O-rings 124 in order to provide environmental seal between the cable gland 100 and the optical joint closure.

The central body 120 comprises an external threaded portion 125 located between the second end 122 and the locking elements 123. The external threaded portion 125 cooperates with a corresponding internal threaded portion of a first clamping nut 110 in order to radially clamp the optical cable 20 when the first clamping nut 110 is tightened on the cable gland 100. To this end, the second end 122 includes a plurality of spaced apart flexible fingers which can be squeezed together against the cable surface when the first clamping nut 110 is attached to the second end 122 of the central body 120. Further, in some cases, it is possible that the first clamping nut 110 is designed to clamp a standard corrugated pipe where an optical cable 20 is fitted inside it.

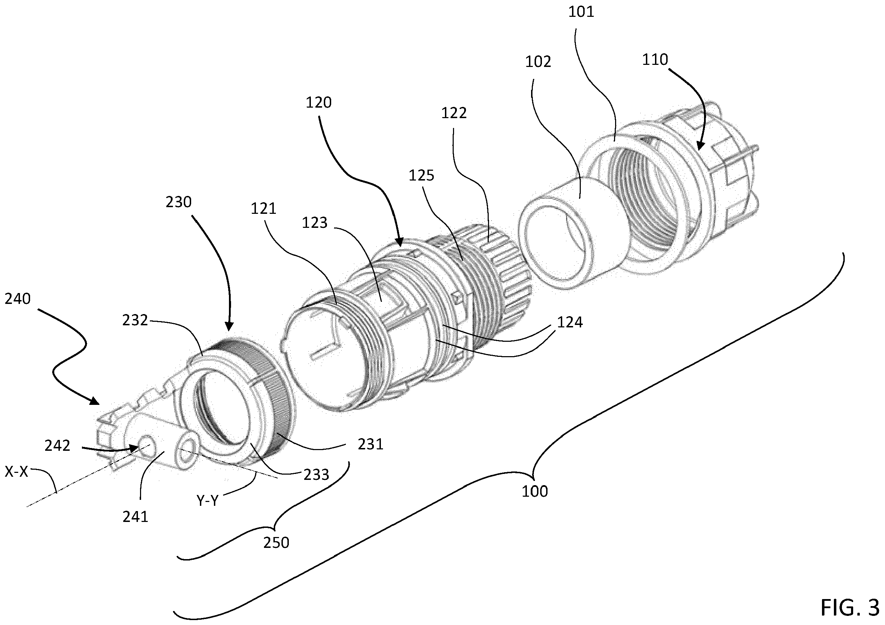

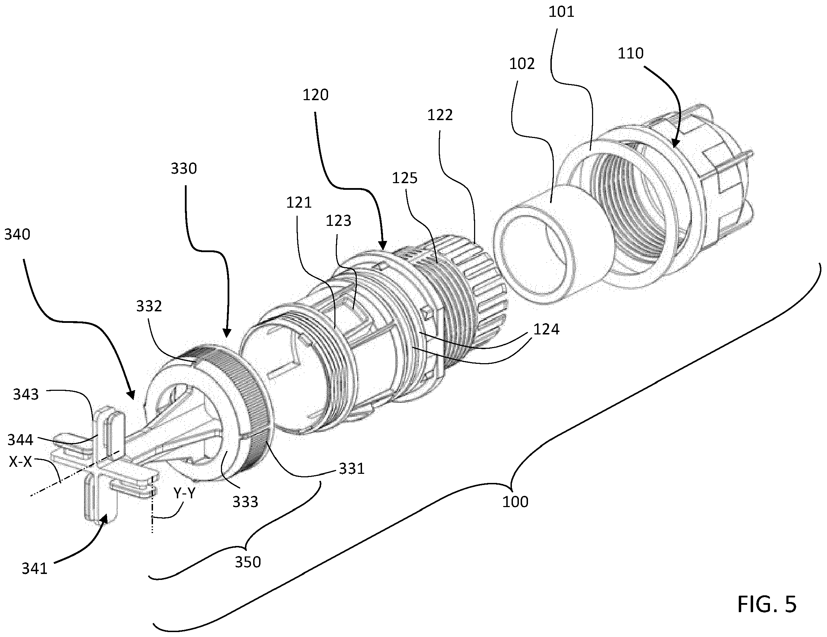

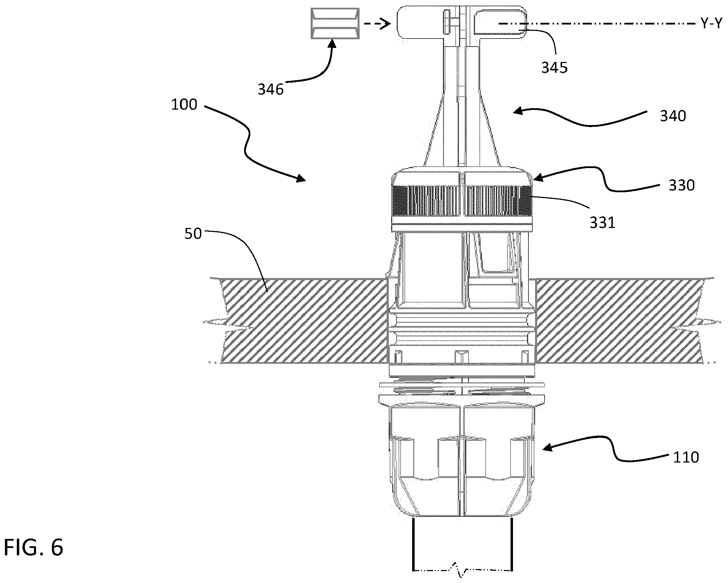

An optional internal sealing member 102 may be fitted into the second end 122 to improve the sealing capability of the overall cable gland 100 around the optical cable 20. The internal sealing member 102 is cylindrically and ring-shaped and it is made of rubber so that when the first clamping nut 110 is screwed on the cable gland 100, the internal sealing member 102 is squeezed improving the sealing and the retaining action on the cable 20. Between the second end 122 and the first clamping element 110 a washer 101 may be provided (see examples of figure 3 and 5). Optionally, for the embodiment illustrated in figure 5 and 6, the internal sealing member 102 may be completely filled of rubber and it comprises a plurality of holes (not shown) each for receiving a single riser/drop optical cable.

Advantageously, the cable gland 100 comprises a cable securing assembly 150 attachable to the first end 121 of the cable gland 100. The cable securing assembly 150 is interchangeable depending on the type of the cable which passes through the cable gland as it will be described in detail herein after.

In the example shown on figure 1 and according to the claimed invention, the cable securing assembly 150 comprises a second clamping nut 130, preferably ring-shaped. The second clamping nut 130 comprises a lateral surface 131 internally threaded which cooperates with the first threaded end 121 of the central body 120. However, for the skilled person will be clear that other types of fastening can be used for fastening the clamping nut 130 to the first end 121 of the cable gland (for example bayonet fittings or the like).

The lateral surface 131 of the second clamping nut 130 extends for a length comprises between 5 mm and 15 mm, preferably 9 mm.

With reference to the example shown in figure 2, the lateral surface 131 of the second clamping nut 130 ends with a tapered lateral surface 132.

The second clamping nut 130 further comprises a first annular surface 133 connected to the tapered lateral surface 132 and which is an extension of the tapered lateral surface 132. The first annular surface 133 is preferably tapered.

Advantageously, the second clamping nut 130 comprises a second annular surface 134 (shown in figure 1) connected to the first annular surface 133 and which is tapered with respect to the extension axis of the second clamping nut 130. The second annular surface 134 is oriented along a substantially opposite direction with respect to the first annular surface 133. The second annular surface 134 extends from the first annular surface 133.

According to the claimed invention, the cable securing assembly 150 comprises a cable retention group 140 cooperating with the second clamping nut 130 for retaining and securing the optical cable as better described here below.

In case the cable gland is used, for example, for a BLT cable, the cable retention group 140 comprises a cylinder 141, an internal sealing member 143 and an internal sealing disk 144 cooperating between them.

In particular, the cylinder 141 comprises a plurality of chambers 142. Each chamber 142 has a circular hole for receiving a buffer tube 22 of the BLT cable 20. In the example shown in figure 1, the chambers 142 may be helix-arranged with six chambers 142 circumferentially arranged and one chamber centrally arranged. However, the cylinder 141 may have different configurations with a different number of chambers 142 in order to receive other types of BLT cables.

Advantageously, the internal sealing member 143 is fitted into the cylinder 141 in order to retain and secure the optical cable 20 on the cable gland 100. In particular, the internal sealing member 143 is preferably cylindrically-shaped and it may be made of rubber. Preferably, the internal sealing member 143 is shaped substantially as the cylinder 141 so that the chambers 142 of the cylinder 141 are axially arranged with the chambers of the internal sealing member 143 when the BLT cable is fitted inside the cable gland 100.

Further, the internal sealing disk 144 is fitted into the cylinder 141 and over the internal sealing member 144. Advantageously, when the second clamping nut 130 is screwed on the first threaded end 121 of the cable gland 100, the edge of the second annular surface 134 pushes the internal sealing disk 144 against the internal sealing member 144 so that the latter is squeezed on the buffer tubes 22 improving the retaining action on the whole cable 20. Moreover, with this solution it is possible to seal the voids between the tubes of the BLT cable and also increase overall pull out resistance.

With reference to the **second example** shown in figure 3, the cable gland 100 is configured to receive, preferably, an MLT (or BLT) cable with a central rigid strength member 24.

The cable gland 100 has a cable securing assembly 250 comprising a cable retention group 240 projected from a clamping nut 230 similar to the second clamping nut 130 of the first example.

Preferably, the cable retention group 240 extends along the longitudinal direction X-X from one side of the clamping nut 230. The cable retention group 240 is a partially extension of the lateral surface 231 of the clamping nut 230.

The clamping nut 230 is preferably ring-shaped and comprises a lateral surface 231 internally threaded which cooperates with the first threaded end 121 of the central body 120. Even for this embodiment, other types of fastening can be used for fastening the clamping nut 230 to the first end 121 of the cable gland (for example bayonet fittings or the like).

The lateral surface 231 of the clamping nut 230 extends for a length comprises between 5 mm and 15 mm, preferably 9 mm.

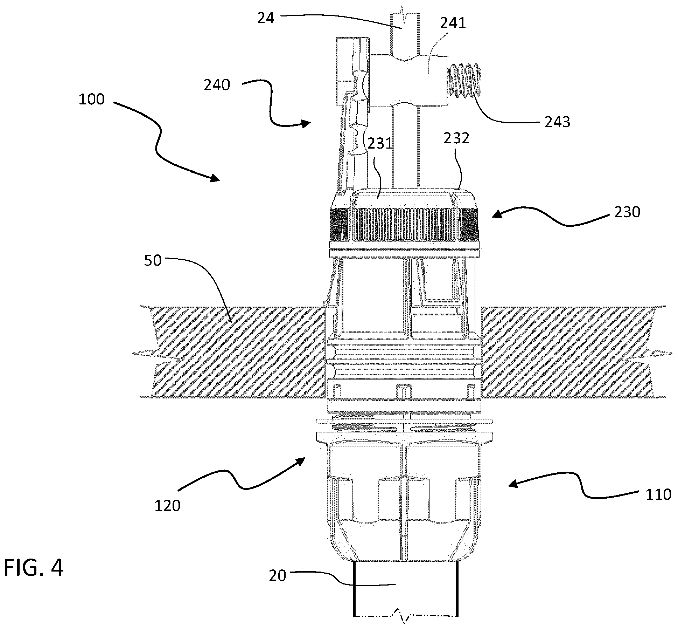

Advantageously, the cable retention group 240 comprises a securing portion 241 having a cylindrical element transversally holed and configured to receive the central strength members 24 (or a central buffer tube) of a MLT optical cable passing through its hole 242. A grab screw 243 (shown in figure 4) may be inserted into the securing portion 241 in order to block from movement the central strength member 24 (or the central buffer tube) improving the retaining action of the overall MLT optical cable. Preferably, the securing portion 241 extends along a direction Y-Y orthogonal with respect to the longitudinal direction X-X. For the skilled person it will be clear that the cable gland of the second example can be used for different cable types without buffer tubes (for example drop/riser cables where the fibers are loosed arranged inside a single or double layer sheath and surrounded by aramid yarns). In this case, the cylindrical element transversally holed is configured to receive the whole drop cable passing through the hole 242.

With the solution here described, even when the central body 120 is fitted inside an optical joint closure, it is possible to interchange the cable securing assembly 150 of the first example (shown in figure 1 and 2) with the cable securing assembly 250 of the second example (shown in figure 3 and 4) simplifying installation and saving moulding costs.

With reference to the **third example** shown in figure 5, the cable gland 100 is configured to receive, preferably, from one to four drop/riser optical cables with aramid yarns between the fiber units.

The cable gland 100 has a cable securing assembly 350 comprising a cable retention group 340 projected from a clamping nut 330 similar to the clamping nut 130 of the first example.

Preferably, the cable retention group 340 extends axially along the longitudinal direction X-X from one side of the clamping nut 330.

The clamping nut 330 is preferably ring-shaped and comprises a lateral surface 331 internally threaded which cooperates with the first threaded end 121 of the central body 120.

The lateral surface 331 of the clamping nut 330 extends for a length comprises between 5 mm and 15 mm, preferably 9 mm.

The cable retention group 340 is attached to the clamping nut 330 through at least two, preferably four, connection bridges 345. The connection bridges 345 are configured to connect the lower base 146 of the cable retention group 340 with the internal edge of the annular surface 333.

Preferably, the clamping nut 330 is made of one-piece. Alternatively, the cable retention group 340 is a separate part which may be coupled with the clamping nut 330. For example, it may be possible to set the length of the connection bridges 345 so that their overall lengths substantially match with the diameter of the annular surface 333. The cable retention group 340 can thus fitted inside the clamping nut 330 by friction.

Advantageously, the cable retention group 340 ends with a securing portion 341 comprising a reel 342 configured to receive at least one turn of the flexible strength members of an optical cable.

Preferably, the securing portion 341 is "X" shaped in order to secure and retain at least four optical cables individually. In particular, the securing portion 341 may comprise two arms crossed between them so that the end of each arm is configured to support a reel 342.

Preferably, each reel 342 is shaped as an elongate mushroom with a stem 344 and an enlarged longitudinally retaining head 345. In the example of figure 5, the stem 344 of each reels 342 extend along the orthogonal direction Y-Y forming the "X" shaped securing portion 341.

According to the example shown in figure 6, a clip 346 configured to cooperate with the reel 342 is provided. Each clip 346 is configured for cooperating with a reel 343. Therefore, in case of two reels 343, there may be provided two clips 346. Advantageously, the clip 346 is configured to maintain at least one turn of the flexible strength members of an optical cable around the reel 342.

Each of the clips 346 has a "C" cross-section. Preferably, each clip 346 is elongate. Preferably, each clip 346 has a length which is about the length of the reel 343. Each clip 346 is configured to cooperate with a reel 343 by elastically pressing towards the two parallel surfaces of the reel stem 344 for avoiding unrolling of the flexible strength members from the reel stem 344.

Since when the central body 120 is fitted inside an optical joint closure, the first threaded end 121 is positioned inside the optical joint closure, it is possible, advantageously, to interchange the cable securing assembly 150 of the first example (shown in figure 1 and 2) with the cable securing assembly 250 of the second example (shown in figure 3 and 4) or with the cable securing assembly 350 of the third example (shown in figure 5 and 6). In this way, the central body 120 can be usable with different cable securing assembly 150,250,350 for retaining and securing optical cables regardless to the cable type. Moreover, a user can change the retention elements with the central body 120 already fitted in an optical joint reducing installation times.

## Claims

1. A cable gland (100) for securing and retaining an optical cable (20), said optical cable (20) comprising optical fiber units and strength members, said cable gland (100) being partially insertable in a base (50) of an optical joint closure and comprising:
- a central body (120) longitudinally extended along a longitudinal direction (X-X) between a first end (121) and a second end (122) and configured to receive said optical cable (20) passing through said ends (121,122), wherein said central body (120) comprises one or more locking elements (123) protruding from the surface of the central body (120);
wherein the one or more locking elements (123) have a deformable cantilever structure and
wherein when said central body (120) is partially inserted in said optical joint closure, said first end (121) is positioned inside the inner volume of said optical joint closure and said second end (122) is positioned outside said optical joint closure, and wherein the locking elements (123) are configured to be secured to said base (50) of the optical joint closure after insertion of the cable gland (100) in the optical joint closure,
- a first clamping nut (110) cooperating with said second end (122) of the central body (120) for radially clamping the optical cable (20), and
- a cable securing assembly (250,350);
**characterized in that**
the cable securing assembly (250,350) comprises a second clamping nut (230,330) attached to said first end (121) of said central body (120) and a cable retention group (240,340) cooperating with said second clamping nut (230,330) in order to retain and secure said optical cable (20) on said cable gland (100), said second clamping nut (230,330) being ring-shaped and comprising a lateral surface (231,331) at least partially internally threaded and configured to cooperate with said first end (121) of said central body (120), said cable retention group (240,340) projecting from said second clamping nut (230,330) along said longitudinal direction (X-X), said cable retention group (240,340) being configured to be completely positioned inside the inner volume of said optical joint closure after insertion of the cable gland in the optical joint closure.

2. A cable gland (100) according to claim 1, wherein said cable retention group (240,340) ends with a securing portion (241,341) configured to retain and secure said cable (20), said securing portion (241,341) being extended along an orthogonal direction (Y-Y) with respect to said longitudinal direction (X-X).

3. A cable gland (100) according to any of the preceding claims, wherein said cable retention group (240) is integrally formed with said second clamping nut (130,230,330).

4. A cable gland (100) according to any of the preceding claims, wherein said cable retention group (240) is a partial extension of said lateral surface (231)

5. A cable gland (100) according to any of claims 2-4, wherein said securing portion (241) comprises a holed finger element configured to receive said strength members passing through its hole (242).

6. A cable gland (100) according to claim 5, wherein said securing portion (241) is attachable to said cable retention group (240) after said strength members are passed through said hole (242).

7. A cable gland (100) according to any of the preceding claims, wherein said cable retention group (340) projects axially from said second clamping nut (330).

8. A cable gland (100) according to claim 8, wherein said securing portion (341) comprises at least a reel (342) configured to receive at least one turn of said strength members of said optical cable (20).

9. A cable gland (100) according to claim 8, comprising a clip (346) configured to cooperate with said reel (342) for maintaining said at least one turn of said strength members around said reel (342).

10. A cable gland (100) according to claim 9, wherein said securing portion (341) is cross-shaped in order to secure and retain at least four optical cables (20) individually.

11. A cable gland (100) for securing and retaining an optical cable (20), said optical cable (20) comprising optical fiber units and strength members, said cable gland (100) being partially insertable in a base (50) of an optical joint closure and comprising:
- a central body (120) longitudinally extended along a longitudinal direction (X-X) between a first end (121) and a second end (122) and configured to receive said optical cable (20) passing through said ends (121,122), wherein said central body (120) comprises one or more locking elements (123) protruding from the surface of the central body (120);
wherein the one or more locking elements (123) have a deformable cantilever structure and
wherein when said central body (120) is partially inserted in said optical joint closure, said first end (121) is positioned inside the inner volume of said optical joint closure and said second end (122) is positioned outside said optical joint closure, and wherein the locking elements (123) are configured to be secured to said base (50) of the optical joint closure after insertion of the cable gland (100) in the optical joint closure,
- a first clamping nut (110) cooperating with said second end (122) of the central body (120) for radially clamping the optical cable (20), and
- a cable securing assembly (150);
**characterized in that**
the cable securing assembly (150) comprises a second clamping nut (130) attached to said first end (121) of said central body (120) and a cable retention group (140) cooperating with said second clamping nut (130) to retain and secure said optical cable (20) on said cable gland (100), said second clamping nut (130) being ring-shaped and comprising a lateral surface (131) at least partially internally threaded and configured to cooperate with said first end (121) of said central body (120), wherein said cable retention group (140) comprises a cylinder (141), an internal sealing member (143) and an internal sealing disk (144) cooperating between them, the internal sealing disk (144) being fitted into the cylinder (141) and over the internal sealing member (143).

12. A cable gland (100) according to claim 11, wherein the internal sealing member (143) is squeezable by said second clamping nut (130) when said second clamping nut (130) is attached to said central body (120).

13. A cable gland (100) according to claim 11 or 12, wherein said cylinder (141) comprises a plurality of chambers (142), each chamber (142) having a circular hole for receiving a buffer tube (22) of the optical cable (20).

14. A cable gland (100) according to claim 13, wherein the internal sealing member (143) is fitted into the cylinder (141) to retain and recure the optical cable (20) on the cable gland (100), the internal sealing member (143) being shaped substantially as the cylinder (141) so that the chambers (142) of the cylinder (141) are axially arranged with chambers of the internal sealing member (143) when the cable is fitted inside the cable gland (100).

15. A cable gland (100) according to claim 14, wherein the internal sealing member (143) is cylindrically shaped and is made of rubber.

## Patentansprüche

1. Kabelflansch (100) zum Sichern und Halten eines optischen Kabels (20), wobei das optische Kabel (20) optische Fasereinheiten und Verstärkungselemente umfasst, wobei der Kabelflansch (100) teilweise in eine Basis (50) eines optischen Verbindungsverschlusses einführbar ist und umfasst:
- einen zentralen Körper (120), der sich in Längsrichtung entlang einer Längsrichtung (X-X) zwischen einem ersten Ende (121) und einem zweiten Ende (122) erstreckt und so konfiguriert ist, dass er das optische Kabel (20) aufnimmt, das durch die Enden (121, 122) verläuft, wobei der zentrale Körper (120) ein oder mehrere Verriegelungselemente (123) umfasst, die von der Oberfläche des zentralen Körpers (120) vorstehen; wobei der zentrale Körper (120) ein oder mehrere Verriegelungselemente (123) aufweist, die von der Oberfläche des zentralen Körpers (120) vorstehen; wobei das eine oder die mehreren Verriegelungselemente (123) eine verformbare freitragende Struktur aufweisen und wobei, wenn der zentrale Körper (120) teilweise in den optischen Verbindungsverschluss eingeführt ist, das erste Ende (121) innerhalb des inneren Volumens des optischen Verbindungsverschlusses positioniert ist und das zweite Ende (122) außerhalb des optischen Verbindungsverschlusses positioniert ist, und wobei die Verriegelungselemente (123) so konfiguriert sind, dass sie an der Basis (50) des optischen Verbindungsverschlusses nach dem Einführen des Kabelflanschs (100) in den optischen Verbindungsverschluss befestigt werden,
- eine erste Klemmmutter (110), die mit dem zweiten Ende (122) des zentralen Körpers (120) zusammenwirkt, um das optische Kabel (20) radial zu klemmen,
- eine Kabelbefestigungsanordnung (250, 350); **dadurch gekennzeichnet, dass** die Kabelbefestigungsanordnung (250, 350) eine zweite Klemmmutter (230, 330), die an dem ersten Ende (121) des zentralen Körpers (120) angebracht ist, und eine Kabelhaltegruppe (240, 340) umfasst, die mit der zweiten Klemmmutter (230, 330) zusammenwirkt, um das optische Kabel (20) an dem Kabelflansch (100) zu halten und zu befestigen, wobei die zweite Klemmmutter (230, 330) ringförmig ist und eine Seitenfläche (231, 331) aufweist, die zumindest teilweise mit einem Innengewinde versehen und so konfiguriert ist, dass sie mit dem ersten Ende (121) des Zentralkörpers (120) zusammenwirkt, wobei die Kabelhaltegruppe (240, 340) von der zweiten Klemmmutter (230, 330) entlang der Längsrichtung (X-X) vorsteht, wobei die Kabelhaltegruppe (240, 340) so konfiguriert ist, dass sie nach dem Einsetzen der Kabelverschraubung in den optischen Verbindungsverschluss vollständig innerhalb des Innenvolumens des optischen Verbindungsverschlusses positioniert wird.

2. Kabelflansch (100) nach Anspruch 1, wobei die Kabelhaltegruppe (240, 340) mit einem Sicherungsabschnitt (241, 341) endet, der so konfiguriert ist, dass er das Kabel (20) hält und sichert, wobei sich der Sicherungsabschnitt (241, 341) entlang einer orthogonalen Richtung (Y-Y) in Bezug auf die Längsrichtung (X-X) erstreckt.

3. Kabelflansch (100) nach einem der vorhergehenden Ansprüche, wobei die Kabelhaltegruppe (240) einstückig mit der zweiten Klemmmutter (130, 230, 330) ausgebildet ist.

4. Kabelflansch (100) nach einem der vorangehenden Ansprüche, wobei die Kabelhaltegruppe (240) eine teilweise Verlängerung der Seitenfläche (231) ist.

5. Kabelflansch (100) nach einem der Ansprüche 2 bis 4, wobei der Befestigungsabschnitt (241) ein mit einem Loch versehenes Fingerelement umfasst, das so konfiguriert ist, dass es die durch sein Loch (242) hindurchtretenden Festigkeitselemente aufnimmt.

6. Kabelflansch (100) nach Anspruch 5, wobei der Befestigungsabschnitt (241) an der Kabelhaltegruppe (240) angebracht werden kann, nachdem die Festigkeitselemente durch das Loch (242) geführt wurden.

7. Kabelflansch (100) nach einem der vorhergehenden Ansprüche, wobei die Kabelhaltegruppe (340) axial von der zweiten Spannmutter (330) vorsteht.

8. Kabelflansch (100) nach Anspruch 8, wobei der Befestigungsabschnitt (341) mindestens eine Spule (342) umfasst, die so konfiguriert ist, dass sie mindestens eine Windung der Verstärkungselemente des optischen Kabels (20) aufnimmt.

9. Kabelflansch (100) nach Anspruch 8, mit einer Klemme (346), die so gestaltet ist, dass sie mit der Spule (342) zusammenwirkt, um die mindestens eine Windung der Festigkeitselemente um die Spule (342) herum zu halten.

10. Kabelflansch (100) nach Anspruch 9, wobei der Sicherungsabschnitt (341) kreuzförmig ist, um mindestens vier optische Kabel (20) einzeln zu sichern und zu halten.

11. Kabelflansch (100) zum Sichern und Halten eines optischen Kabels (20), wobei das optische Kabel (20) optische Fasereinheiten und Festigkeitselemente umfasst, wobei der Kabelflansch (100) teilweise in eine Basis (50) eines optischen Verbindungsverschlusses einführbar ist und umfasst:
- einen zentralen Körper (120), der sich in Längsrichtung entlang einer Längsrichtung (X-X) zwischen einem ersten Ende (121) und einem zweiten Ende (122) erstreckt und so konfiguriert ist, dass er das optische Kabel (20) aufnimmt, das durch die Enden (121, 122) verläuft, wobei der zentrale Körper (120) ein oder mehrere Verriegelungselemente (123) umfasst, die von der Oberfläche des zentralen Körpers (120) vorstehen;
wobei der zentrale Körper (120) ein oder mehrere Verriegelungselemente (123) aufweist, die von der Oberfläche des zentralen Körpers (120) vorstehen; wobei das eine oder die mehreren Verriegelungselemente (123) eine verformbare freitragende Struktur aufweisen und wobei, wenn der zentrale Körper (120) teilweise in den optischen Verbindungsverschluss eingeführt ist, das erste Ende (121) innerhalb des inneren Volumens des optischen Verbindungsverschlusses positioniert ist und das zweite Ende (122) außerhalb des optischen Verbindungsverschlusses positioniert ist, und wobei die Verriegelungselemente (123) so konfiguriert sind, dass sie an der Basis (50) des optischen Verbindungsverschlusses nach dem Einführen des Kabelflanschs (100) in den optischen Verbindungsverschluss befestigt werden,
- eine erste Klemmmutter (110), die mit dem zweiten Ende (122) des zentralen Körpers (120) zusammenwirkt, um das optische Kabel (20) radial zu klemmen,
- eine Kabelbefestigungsanordnung (150);
**dadurch gekennzeichnet, dass** die Kabelbefestigungsanordnung (150) eine zweite Klemmmutter (130) umfasst, die an dem ersten Ende (121) des Mittelkörpers (120), eine zweite Klemmmutter (130), die an dem ersten Ende (121) des zentralen Körpers (120) befestigt ist, und eine Kabelhaltegruppe (140) umfasst, die mit der zweiten Klemmmutter (130) zusammenwirkt, um das optische Kabel (20) an dem Kabelflansch (100) zu halten und zu sichern, wobei die zweite Klemmmutter (130) ringförmig ist und eine Seitenfläche (131) umfasst, die zumindest teilweise mit einem Innengewinde versehen und so gestaltet ist, dass sie mit dem ersten Ende (121) des zentralen Körpers (120) zusammenwirkt, wobei die Kabelhaltegruppe (140) einen Zylinder (141), ein inneres Dichtungselement (143) und eine innere Dichtungsscheibe (144) umfasst, die zwischen ihnen zusammenwirken, wobei die innere Dichtungsscheibe (144) in den Zylinder (141) und über das innere Dichtungselement (143) eingepasst ist.

12. Kabelflansch (100) nach Anspruch 11, wobei das innere Dichtungselement (143) durch die zweite Spannmutter (130) zusammendrückbar ist, wenn die zweite Spannmutter (130) an dem zentralen Körper (120) angebracht ist.

13. Kabelflansch (100) nach Anspruch 11 oder 12, wobei der Zylinder (141) eine Vielzahl von Kammern (142) umfasst, wobei jede Kammer (142) ein kreisförmiges Loch zur Aufnahme eines Pufferrohrs (22) des optischen Kabels (20) aufweist.

14. Kabelflansch (100) nach Anspruch 13, wobei das innere Dichtungselement (143) in den Zylinder (141) eingepasst ist, um das optische Kabel (20) an dem Kabelflansch (100) zu halten und zu befestigen, wobei das innere Dichtungselement (143) im Wesentlichen wie der Zylinder (141) geformt ist, so dass die Kammern (142) des Zylinders (141) axial mit Kammern des inneren Dichtungselements (143) angeordnet sind, wenn das Kabel in den Kabelflansch (100) eingeführt ist.

15. Kabelflansch (100) nach Anspruch 14, wobei das innere Dichtungselement (143) zylindrisch geformt ist und aus Gummi besteht.

## Revendications

1. Passe-câble (100) pour fixer et retenir un câble optique (20), ledit câble optique (20) comprenant des unités de fibre optique et des organes de renfort, ledit passe-câble (100) étant apte à être partiellement inséré dans une base (50) d'une fermeture de raccordement optique et comprenant :
- un corps central (120) s'étendant longitudinalement le long d'une direction longitudinale (X-X) entre une première extrémité (121) et une seconde extrémité (122) et configuré pour recevoir ledit câble optique (20) traversant lesdites extrémités (121, 122), dans lequel ledit corps central (120) comprend un ou plusieurs éléments de verrouillage (123) faisant saillie à partir de la surface du corps central (120) ;
dans lequel les un ou plusieurs éléments de verrouillage (123) possèdent une structure en porte-à-faux déformable et
dans lequel, lorsque ledit corps central (120) est partiellement inséré dans ladite fermeture de raccordement optique, ladite première extrémité (121) est positionnée à l'intérieur du volume interne de ladite fermeture de raccordement optique et ladite seconde extrémité (122) est positionnée à l'extérieur de ladite fermeture de raccordement optique, et dans lequel les éléments de verrouillage (123) sont configurés pour être fixés à ladite base (50) de la fermeture de raccordement optique après l'insertion du passe-câble (100) dans la fermeture de raccordement optique,
- un premier écrou de serrage (110) coopérant avec ladite seconde extrémité (122) du corps central (120) pour serrer radialement le câble optique (20), et
- un ensemble de fixation de câble (250, 350) ;
**caractérisé en ce que**
l'ensemble de fixation de câble (250, 350) comprend
un second écrou de serrage (230, 330) attaché à ladite première extrémité (121) dudit corps central (120) et un groupe de retenue de câble (240, 340) coopérant avec ledit second écrou de serrage (230, 330) afin de retenir et fixer ledit câble optique (20) sur ledit passe-câble (100), ledit second écrou de serrage (230, 330) étant de forme annulaire et comprenant une surface latérale (231, 331) au moins partiellement filetée de manière interne et configurée pour coopérer avec ladite première extrémité (121) dudit corps central (120), ledit groupe de retenue de câble (240, 340) faisant saillie à partir dudit second écrou de serrage (230, 330) le long de ladite direction longitudinale (X-X), ledit groupe de retenue de câble (240, 340) étant configuré pour être complètement positionné à l'intérieur du volume interne de ladite fermeture de raccordement optique après l'insertion du passe-câble dans la fermeture de raccordement optique.

2. Passe-câble (100) selon la revendication 1, dans lequel ledit groupe de retenue de câble (240, 340) se termine par une partie de fixation (241, 341) configurée pour retenir et fixer ledit câble (20), ladite partie de fixation (241, 341) s'étendant le long d'une direction orthogonale (Y-Y) par rapport à ladite direction longitudinale (X-X).

3. Passe-câble (100) selon l'une quelconque des revendications précédentes, dans lequel ledit groupe de retenue de câble (240) est formé d'un seul tenant avec ledit second écrou de serrage (130, 230, 330).

4. Passe-câble (100) selon l'une quelconque des revendications précédentes, dans lequel ledit groupe de retenue de câble (240) est une extension partielle de ladite surface latérale (231).

5. Passe-câble (100) selon l'une quelconque des revendications 2 à 4, dans lequel ladite partie de fixation (241) comprend un élément de type doigt troué configuré pour recevoir lesdits organes de renfort traversant son trou (242).

6. Passe-câble (100) selon la revendication 5, dans lequel ladite partie de fixation (241) est apte à être attachée audit groupe de retenue de câble (240) après que lesdits organes de renfort ont traversé ledit trou (242).

7. Passe-câble (100) selon l'une quelconque des revendications précédentes, dans lequel ledit groupe de retenue de câble (340) fait axialement saillie à partir dudit second écrou de serrage (330).

8. Passe-câble (100) selon la revendication 8, dans lequel ladite partie de fixation (341) comprend au moins un enrouleur (342) configuré pour recevoir au moins une spire desdits organes de renfort dudit câble optique (20).

9. Passe-câble (100) selon la revendication 8, comprenant une pince (346) configurée pour coopérer avec ledit enrouleur (342) pour maintenir ladite au moins une spire desdits organes de renfort autour dudit enrouleur (342).

10. Passe-câble (100) selon la revendication 9, dans lequel ladite partie de fixation (341) est en forme de croix afin de fixer et de retenir au moins quatre câbles optiques (20) individuellement.

11. Passe-câble (100) pour fixer et retenir un câble optique (20), ledit câble optique (20) comprenant des unités de fibre optique et des organes de renfort, ledit passe-câble (100) étant apte à être partiellement inséré dans une base (50) d'une fermeture de raccordement optique et comprenant :
- un corps central (120) s'étendant longitudinalement le long d'une direction longitudinale (X-X) entre une première extrémité (121) et une seconde extrémité (122) et configuré pour recevoir ledit câble optique (20) traversant lesdites extrémités (121, 122), dans lequel ledit corps central (120) comprend un ou plusieurs éléments de verrouillage (123) faisant saillie à partir de la surface du corps central (120) ;
dans lequel les un ou plusieurs éléments de verrouillage (123) possèdent une structure en porte-à-faux déformable et
dans lequel, lorsque ledit corps central (120) est partiellement inséré dans ladite fermeture de raccordement optique, ladite première extrémité (121) est positionnée à l'intérieur du volume interne de ladite fermeture de raccordement optique et ladite seconde extrémité (122) est positionnée à l'extérieur de ladite fermeture de raccordement optique, et dans lequel les éléments de verrouillage (123) sont configurés pour être fixés à ladite base (50) de la fermeture de raccordement optique après l'insertion du passe-câble (100) dans la fermeture de raccordement optique,
- un premier écrou de serrage (110) coopérant avec ladite seconde extrémité (122) du corps central (120) pour serrer radialement le câble optique (20), et
- un ensemble de fixation de câble (150) ;
**caractérisé en ce que**
l'ensemble de fixation de câble (150) comprend un second écrou de serrage (130) attaché à ladite première extrémité (121) dudit corps central (120) et un groupe de retenue de câble (140) coopérant avec ledit second écrou de serrage (130) pour retenir et fixer ledit câble optique (20) sur ledit passe-câble (100), ledit second écrou de serrage (130) étant de forme annulaire et comprenant une surface latérale (131) au moins partiellement filetée de manière interne et configurée pour coopérer avec ladite première extrémité (121) dudit corps central (120), dans lequel ledit groupe de retenue de câble (140) comprend un cylindre (141), un organe d'étanchéité interne (143) et un disque d'étanchéité interne (144) coopérant entre eux, le disque d'étanchéité interne (144) étant ajusté dans le cylindre (141) et par-dessus l'organe d'étanchéité interne (143).

12. Passe-câble (100) selon la revendication 11, dans lequel l'organe d'étanchéité interne (143) est apte être compressé par ledit second écrou de serrage (130) lorsque ledit second écrou de serrage (130) est attaché audit corps central (120).

13. Passe-câble (100) selon la revendication 11 ou 12, dans lequel ledit cylindre (141) comprend une pluralité de chambres (142), chaque chambre (142) ayant un trou circulaire pour la réception d'un tube tampon (22) du câble optique (20).

14. Passe-câble (100) selon la revendication 13, dans lequel l'organe d'étanchéité interne (143) est ajusté dans le cylindre (141) pour retenir et fixer le câble optique (20) sur le passe-câble (100), l'organe d'étanchéité interne (143) étant sensiblement de même forme que le cylindre (141) de sorte que les chambres (142) du cylindre (141) soient axialement agencées avec les chambres de l'organe d'étanchéité interne (143) lorsque le câble est ajusté à l'intérieur du passe-câble (100).

15. Passe-câble (100) selon la revendication 14, dans lequel l'organe d'étanchéité interne (143) est de forme cylindrique et est constitué de caoutchouc.
